# EUROPEAN PATENT APPLICATION

(11) **EP 4 488 339 A1**
(43) Date of publication of application: **08.01.2025**
(21) Application number: 23183544.8
(22) Date of filing: 05.07.2023
(51) Int. Cl.: C09D 5/02, C09D 5/18, C09D 7/65

(54) **FIRE-PROTECTION COMPOSITION WITH IMPROVED LOW TEMPERATURE DRYING PROPERTIES AND FIRE-PROTECTION COATING RESULTING THEREFROM**

(71) Applicant: Hilti Aktiengesellschaft, 9494 Schaan (LI)
(72) Inventor: Farras Gutierrez, Hector, 86507 Oberottmarshausen (DE); Simon, Sebastian, 86807 Buchloe Lindenberg (DE)
(74) Representative: Hilti Aktiengesellschaft Corporate Intellectual Property

(57) **Abstract**

The present invention relates to an aqueous fire-protection coating composition with improved low temperature drying properties, and a fire-protection coating produced from said aqueous fire-protection coating composition. The resulting fire-protection coating shows improved pull-off strength from a substrate after applying low temperature drying. Furthermore, the present invention relates to the use of an alkoxylated polymer as coalescing agent in an aqueous fire-protection coating composition to reduce the minimum film formation temperature of the aqueous fire-protection coating composition.

## Description

The present invention relates to an aqueous fire-protection coating composition with improved low temperature drying properties, and a fire-protection coating produced from said aqueous fire-protection coating composition. The resulting fire-protection coating shows improved pull-off strength from a substrate after applying low temperature drying. Furthermore, the present invention relates to the use of an alkoxylated polymer as coalescing agent in an aqueous fire-protection coating composition to reduce the minimum film formation temperature of the aqueous fire-protection coating composition.

Fire protection compositions, also known as intumescent compositions, are usually applied to the surface of components to form coatings in order to protect them from fire or from the effects of great heat, for example as a result of fire.

Nowadays, steel constructions are an integral part of modern architecture, even if they have a decisive disadvantage compared to reinforced concrete construction. Above a temperature of approximately 500°C the load-bearing capacity of the steel decreases by 50%, i.e. the steel loses its stability and load-bearing capacity. Depending on the fire load, for example direct fire (approx. 1000°C) loss of load-bearing capacity of the structure can be reached already after 5-10 minutes. The objective of fire protection, particularly steel fire protection, is to delay the period of time before the loss of load-bearing capacity of a steel structure in the event of a fire for as long as possible in order to save lives and valuable goods.

Various systems already exist for this, with a large proportion of the products available on the market being based on water-based dispersions.

Aqueous (also known as waterborne) physically drying coatings depend on water evaporation and polymer coalescing properties for its film formation. The so-called minimum film formation temperature of a polymeric matrix (also known as binder) strongly depends on its glass transition temperature. As a rule of thumb lower glass transition temperatures in general allow for lower minimum film formation temperatures.

According to the state-of-the-art glass transition temperatures of compositions for fire-protection coatings can be lowered by the addition of certain amounts of so-called plasticizers and/or coalescent solvents. However, the addition of plasticizers and/or coalescent solvents to fire-protection coating compositions is accompanied with a softening of the resulting coatings and impairs its pull-off strength from a substrate when the film is formed, especially when the film forming takes place at low temperatures, e.g. below 10 °C, particularly at 5 °C.

Prior art documents, such as for example US8519024B2 or EP3538616B1, include the use of high boiling point coalescent solvents to aid the film formation of aqueous intumescent coating compositions. However, the use the described coalescent solvents leads to weakening of the strength of the resulting coating to a substrate, particularly if film formation takes place at low temperatures, e.g. at 5 °C.

It is therefore an object of the present invention to provide an aqueous fire protection coating composition based on polymeric binders with at least one coalescing agent, which is able to lower the film-formation temperature without impairing the film strength of the resulting coating formed from the aqueous fire protection coating composition.

Particularly, it is an object of the present invention to provide an aqueous fire-protection coating composition which leads to an improved pull-of strength of a coating produced from said aqueous fire-protection coating composition after low temperature drying, e.g. below 10 °C, particularly at 5°C.

The object underlying the invention is achieved by an aqueous fire protection composition (or simply composition) according to claim 1.

Further embodiments of the invention are outlined throughout the description.

The aqueous fire-protection coating composition according to the invention comprises:
i) at least one film-forming resin,
ii) at least one coalescing agent,
ii) at least one intumescent composition,
characterized in that the coalescing agent is an alkoxylated polymer comprising a polymeric backbone and at least on alkoxy functionality.

The fire-protection coating composition contains at least one film forming resin, which may be included in amounts of 5 to 50 weight percentage, such as 10 to 45 weight percentage, preferably 20 to 40 weight percentage, based on the total weight of the coating composition.

The film forming resin may be supplied in a carrier liquid, such as an aqueous solvent. As such, the film forming resin may be an aqueous or waterborne resin. Aqueous or waterborne resins may be essentially or completely free of organic solvents. "Essentially free" of a material may be taken to mean that a composition has only trace or incidental amounts of a given material, and that the material is not present in an amount sufficient to affect properties of the composition such as, for example, the drying or intumescent properties.

In one embodiment the aqueous dispersion of the polymeric particles comprises 40 to 60 percentage by weight, particularly 50 percentage by weight, of water based on the total weight of the aqueous dispersion.

In a preferred embodiment the film forming resin is an aqueous dispersion of polymeric particles selected from: (meth)acrylics, vinyls, polyesters, polycarbonates, polylactides, poly ethers, polysulfones, polyurethanes, polyamides, chlorinated polyolefins, polyureas, epoxies, and mixtures or copolymers thereof. Latex polymers are readily synthesized at modest cost and provide a suitable class of aqueous dispersions of polymer particles. Latex polymers are typically prepared through chain-growth polymerization, using one or more olefinic compounds (such as monomers). Nonlimiting examples of olefinic compounds which may be used to prepare latex polymers include ethylene, butadiene, propene, butene, iso-butene, acrylic acid, methacrylic acid, methyl acrylate, ethyl acrylate, propyl acrylate, butyl acrylate, 2-ethylhexyl acrylate, methyl methacrylate, ethyl methacrylate, propyl methacrylate, butyl methacrylate, 2-ethylhexylmethacrylate, hydroxyethyl acrylate, hydroxyethyl methacrylate, hydroxypropyl acrylate, hydroxybutyl acrylate, hydroxybutyl methacrylate, glycidyl methacrylate, 4-hydroxybutyl acrylate glycidylether, acrylamide, methylacrylamide, styrene, α-methyl styrene, vinyl toluene, vinyl acetate, vinyl propionate, allyl methacrylate, acetoacetyl ethyl methacrylate (AAEM), diacetonea crylamide, dimethylaminomethacrylate, dimethylaminomethacrylate, N-hydroxy(meth)acrylamide, vinyl ether maleate, vinyl esters of VFRSATIC^{™} acid (VERSATIC acid is a synthetic saturated monocarboxylic acid of highly branched structure containing about 5 to about 10 carbon atoms), and mixtures thereof.

Particularly suitable film forming resins include vinyl acetate-based resins such as, for example, polyvinyl acetate, copolymers of vinyl acetate-ethylene, terpolymers of vinylacetate ethylene-esters, copolymers of vinyl acetate-vinyl esters of carboxylic acids such as neodecanoic acid, or combinations thereof.

According to the invention the fire protection composition includes a coalescing agent, wherein the coalescing agent is an alkoxylated polymer.

The term "coalescing agent" in the sense of the present invention means a substance that is able to reduce the minimum film formation temperature (MFFT) of an aqueous fire protection coating composition without impairing the properties of a coating resulting from the aqueous fire protection coating composition, particularly with respect to the pull-off strength of the coating from a substrate to which the aqueous fire protection coating composition has been applied.

The term alkoxylated polymer in the sense of the present invention describes a compound comprising a polymeric backbone with at least one alkoxy functionality. Alkoxy functionality means a linear or branched alkyl group, preferably a linear or branched C₁ to C₆ alkyl moiety, bonded to the polymeric backbone via an oxygen atom. The polymeric backbone of the alkoxylated polymer can be selected from a wide range of polymers. According to the invention, a polymer is a molecule with six or more repeating units, which can have a structure that can be linear, branched, star-shaped, rotated, hyper-branched or cross-linked. The polymers can have an individual type of repeating units ("homopolymers") or they can have more than one type of repeating units ("copolymers").

In a preferred embodiment of the invention the polymeric backbone is selected from the group consisting of a polyether, polyester, polyether, polyamide, polyurethane, polyetherurethane, polyetherurethane, polyether ether, polyamide urethane, polyurea, polyamine, polycarbonate, polyisolester, polyacrylate, polyolefin, polyethylene or polypropylene, polyisobutylene, polysulfide, rubber, neoprene, phenolic resin, epoxy resin. Also, amines, such as for example ethoxylated propoxylated ethylenediamine, might be suitable as alkoxylated polymers in the sense of the present invention.

It is preferred that the polymeric backbone is selected from polyethers, epoxy ethers; EO/PO block copolymers and mixtures thereof.

The at least one alkoxy functionality of the alkoxylated polymer is preferably a linear or branched C₁-C₆ alkoxy group, preferably C₁-C₃ alkoxy group. The alkoxylated polymer might have more than one alkoxy functionality which might be the same or different from the first alkoxy functionality.

In one preferred embodiment the alkoxylated polymer has a hydroxyl value in the range between 50 and 150 mg KOH/g, preferably in the range between 80 and 120 mg KOH/g.

Alkoxylated polymers suitable as coalescing agents in the sense of the present invention are for example commercially available under the tradenames Solsperse 27000, Solsperse 79000 and Solsperse 20000 from Lubrizol, BYK 039 from BYK Chemie or Hydropalat WE3322, Hydropalat WE3323 or Hydropalat WE3390 from BASF, or Genapol PN30 (Polyethylenglycol-Monoalkylether) from Merck.

In some embodiments, the coalescing agent may be present in an amount from about 0.01% to about 5% by weight based on a total weight of the composition. In some embodiments, the coalescing agent may be present in an amount from about 0.05% to about 4%, about 0.1 % to about 3%, about 0.1 % to about 2% by weight, based on a total weight of the composition.

In one preferred embodiment the fire-protection coating composition may be essentially free of salts of polymeric carboxylic acids.

In one preferred embodiment the aqueous fire-protection coating composition is free of plasticizers, and/or coalescent solvents. Both plasticizers and coalescent solvents are able to reduce the minimum film formation temperature of a coating composition but impair the pull-off strength of a coating to a substrate produced from said coating composition.

Plasticizers which are preferably to be excluded from the composition are plasticizers selected from among derivatives of benzoic acid, phthalic acid, e.g. phthalates, such as dibutylphthalate, dioctylphthalate, dicyclohexylphthalate, diisooctylphthalate, diisodecylphalate, dibenzylphthalate or butylbenzylphthalate, trimellitic acid, pyromellitic acid, alkane diacid, such as butyric acid, glutaric acid, pimelic acid, adipic acid, suberic acid, azelaic acid, sebacic acid, fumaric acid, maleic acid, itaconic acid, caprylic acid and citric acid, ricinoleic acid, phosphates, alkylphosphate esters, and derivatives of polyesters and polyethers, glycol ethers and glycol esters, epoxy-enhanced oils, sulfonamides, terpenes, oils and derivatives thereof, such as soybean oil, C₁₀-C₂₁ alkylsulfonic acid esters of phenol, alkanes, cycloalkanes, and alkyl esters.

Coalescing solvents which are preferably to be excluded from the composition are for example glycols and glycol ethers, such as propylene glycol butyl ether or dipropylene glycol butyl ether, or 2,2,4-trimethyl-1,3-pentanediolmonoisobutyrate (also known as Texanol) or propylene glycol mono esters of C₆/ C₁₀-aliphatic acids.

The aqueous fire-protection coating compositions may also contain an aqueous solvent which is separate from any solvent supplied with the film forming resin. Aqueous solvents include water as a major component. The aqueous solvent may be included in the aqueous fire-protection coating composition at from 1 to 10 weight percentage, such as 2 to 8 weight percentage, or even 4 to 5 weight percentage, based on the total weight of the composition.

According to the invention, the aqueous fire-protection coating compositions contains an intumescent composition, wherein the intumescent composition may comprise a single compound or a mixture of several compounds.

It is expedient to use as intumescent composition those components which, under the action of heat, expand and form an insulating layer of flame-retardant material, which protects the substrate from overheating and thereby prevents or at least delays a change in the mechanical and static properties of supporting structural parts. The formation of a voluminous insulating layer, namely a char layer, can be formed by the chemical reaction of a mixture of appropriate matched compounds which react with each other when exposed to heat. Such systems are known to those skilled in the art under the term chemical intumescence and can be used in accordance with the invention.

For the formation of an intumescent layer by means of chemical intumescence, at least three components are generally required, a carbon supplier, a dehydrogenation catalyst, and a gas-forming agent, which are contained in a binder in the case of coatings, for example. Under the effect of heat, the binder plasticizes, and the compounds are released, so that they react with one another, in the case of chemical intumescence. The acid that serves as the catalyst for carbonization of the carbon supplier is formed from the dehydrogenation catalyst, by means of thermal decomposition. At the same time, the gas-forming agent decomposes, forming inert gases that brings about expansion of the carbonized (charred) material and, if applicable, the plasticized binder, causing the formation of a voluminous, insulating foam.

In an embodiment of the invention in which the insulating layer is formed by means of chemical intumescence, the insulation-layer-forming additive comprises at least one carbon-skeleton-forming agent, if the binder cannot be used as such, at least one acid-forming agent, at least one gas-forming agent, and at least one inorganic skeleton-forming agent. In particular, the components of the additive are selected so that they can develop synergism, some of the compounds being able to perform several functions.

In case the binder itself can be used as a carbon-skeleton-forming agent, the intumescent composition comprises at least one acid-forming agent and at least one gas-forming agent. Optionally, to increase the stability of the char, the intumescent composition can contain additionally at least one inorganic skeleton-forming agent. Even if the binder itself can serve as a carbon-skeleton-forming agent, an additional carbon-skeleton-forming agent can additionally be added to the intumescent composition.
The components of the intumescent composition are particularly selected in such a manner that they can develop synergy, wherein some of the compounds can fulfill multiple functions.

Compounds usually used in intumescent fire-protection agents and known to a person skilled in the art are possible carbon suppliers, such as compounds similar to starch, for example starch and modified starch, and/or multivalent alcohols (polyols), such as saccharides and polysaccharides and/or a thermoplastic or duroplastic polymer resin binder, such as a phenolic resin, a urea resin, a polyurethane, polyvinyl chloride, poly(meth)acrylate, polyvinyl acetate, polyvinyl alcohol, a silicone resin and/or a natural rubber. Suitable polyols are polyols from the group of sugar, pentaerythritol, dipentaerythritol, tripentaerythritol, polyvinyl acetate, polyvinyl alcohol, sorbitol, EO-PO-polyols. Preferably, pentaerythritol, dipentaerythritol or polyvinyl acetate are used.

It should be mentioned that in the event of a fire, the binder itself can also have the function of a carbon supplier.

Compounds usually used in intumescent fire-protection compositions and known to a person skilled in the art are possible dehydrogenation catalysts or acid-forming agents, such as a salt or an ester of an inorganic, non-volatile acid, selected from among sulfuric acid, phosphoric acid or boric acid. Essentially, compounds containing phosphorus are used; their palette is very large, because they extend over multiple oxidation stages of phosphorus, such as phosphines, phosphine oxides, phosphonium compounds, phosphates, elemental red phosphorus, phosphites, and phosphates. The following examples of phosphoric acid compounds can be mentioned: mono-ammonium phosphate, di-ammonium phosphate, ammonium phosphate, ammonium polyphosphate, melamine phosphate, melamine resin phosphate, potassium phosphate, polyol phosphates such as pentaerythritol phosphate, glycerin phosphate, sorbite phosphate, mannite phosphate, dulcite phosphate, neopentyl glycol phosphate, ethylene glycol phosphate, dipentaerythritol phosphate, and the like. Preferably, a polyphosphate or an ammonium polyphosphate is used as a phosphoric acid compound. In this regard, melamine resin phosphates are understood to be compounds such as the reaction products of Lamelite C (melamine/formaldehyde resin) with phosphoric acid. The following examples of sulfuric acid compounds can be mentioned: ammonium sulfate, ammonium sulfamate, nitroaniline bisulfate, 4-nitroaniline-2-sulfonic acid and 4,4-dinitrosulfanilamide and the like. Melamine borate can be mentioned as an example of a boric acid compound.

Possible gas-forming agents are the compounds usually used in fire-protection agents and known to a person skilled in the art, such as cyanuric acid or isocyanic acid and their derivatives, melamine and its derivatives. Such compounds are cyanamide, dicyanamide, dicyandiamide, guanidine and its salts, biguanide, melamine cyanurate, cyanic acid salts, cyanic acid esters and amide, hexamethoxymethyl melamine, dimelamine pyrophosphate, melamine polyphosphate, melamine phosphate. Preferably, hexamethoxymethyl melamine or melamine (cyanuric acid amide) is used.

Furthermore, components that do not restrict their method of action to a single function, such as melamine polyphosphate, which acts both as an acid-forming agent and as a gas-forming agent, are suitable. Further examples are described in GB 2 007 689 A1, EP 139 401 A1, and US 3,969,291 A1.

Since the char formed in the event of fire is generally too unstable and, depending on its density and structure, can be blown away by air currents, for example, which has a negative effect on the insulating effect, at least one char stabilizer is preferably added to the components just listed. The principal mode of action is that the carbon layers, which are very soft in themselves, are mechanically strengthened by inorganic compounds. The addition of such a char stabilizer contributes to a substantial stabilization of the intumescent crust in case of fire, since these additives increase the mechanical strength. Suitable char stabilizers include compounds commonly used in fire retardant formulations and known to those skilled in the art, for example, expandable graphite and particulate metals, such as aluminum, magnesium, iron and zinc. The particulate metal may be in the form of a powder, platelets, flakes, fibers, filaments and/or whiskers, wherein the particulate metal in the form of powder, platelets or flakes has a particle size of <50 µm, preferably from 0.5 to 10 µm. In the case of using the particulate metal in the form of fibers, filaments and/or whiskers, a thickness of 0.5 to 10 µm and a length of 10 to 50 µm is preferred. Alternatively or additionally, an oxide or a compound of a metal from the group comprising aluminum, magnesium, iron or zinc can be used as an ash crust stabilizer, in particular iron oxide, preferably iron trioxide, titanium dioxide, a borate, such as zinc borate and/or a glass frit of low-melting glasses with a melting temperature preferably at or above 400°C, phosphate or sulfate glasses, melamine polyzinc sulfates, ferro glasses or calcium borosilicates. The addition of such a char stabilizer contributes to a substantial stabilization of the char in the event of fire. Examples of such additives can also be found in US 4 442 157 A, US 3 562 197 A, GB 755 551 A and EP 138 546 A1.

In addition, char stabilizers such as melamine phosphate or melamine borate may be included.

The intumescent composition can be contained in the composition in an amount of 30 to 80 wt.-%, with reference to the total composition, wherein the amount essentially depends on the fire performance properties aimed and the critical pigment volume concentration.

Optionally, one or more reactive flame inhibitors can be added to the aqueous coating composition as further additives. Such compounds are built into the binder. Examples in the sense of the invention are reactive organophosphorus compounds, such as 9,10-dihydro-9-oxa-10-phosphaphene-anthrene-10-oxide (DOPO) and its derivatives, such as, for example, DOPO-HQ, DOPO-NQ, and adducts.

Additional additives, such as thickeners and/or rheology additives, as well as fillers, can be added to the aqueous coating composition. Preferably, polyhydroxycarboxylic acid amides, urea derivatives, salts of unsaturated carboxylic acid esters, alkylammonium salts of acidic phosphoric acid derivatives, ketoximes, amine salts of p-toluene sulfonic acid, amine salts of sulfonic acid derivatives, as well as aqueous or organic solutions or mixtures of the compounds are used as rheology additives, such as anti-settling agents, anti-runoff agents, and thixotropic agents. In addition, rheology additives based on pyrogenic or precipitated silicic acids or based on silanated pyrogenic or precipitated silicic acids can be used. Preferably, the rheology additives are pyrogenic silicic acids, modified and non-modified sheet silicates, precipitation silicic acids, cellulose ethers, polysaccharides, PU and acrylate thickeners, urea derivatives, castor oil derivatives, polyamides and fatty acid amides and polyolefins, if they are present in solid form, powdered celluloses and/or suspension agents such as xanthan gum, for example.

Aside from the additives already described, the aqueous fire-protection coating composition can contain usual aids such as wetting agents, for example based on polyacrylates and/or polyphosphates, defoamers, such as silicone defoamers, pigments, fungicides, or diverse fillers, such as vermiculite, inorganic fibers, quarts sand, micro-glass beads, mica, silicon dioxide, mineral wool, and the like, if necessary.

In this regard, the aqueous fire-protection coating composition can be contained as a total mixture or, divided up into individual components, in one component or multiple components. The division of the fire-protection additive takes place as a function of the compatibility of the compounds contained in the composition, so that neither a reaction of the compounds contained in the composition with one another or reciprocal disruption, nor a reaction of these compounds with the compounds of the other constituents can take place. This is dependent on the compounds used.

The aqueous fire-protection coating composition is applied to a substrate, particularly metallic substrate, as a paste, using a brush, a roller or by means of spraying. Preferably, the composition is applied by means of an airless spraying method.

The substrates to which is the aqueous fire-protection coating can be applied are not restricted and comprise structural parts, particularly steel structural parts and wooden structural parts, but also individual cables, cable bundles, cable runs, and cable ducts or other lines.

The inventive coating composition is preferably applied in the construction sector, as a coating, particularly a fire-protection coating for steel construction elements, but also for construction elements composed of other materials, such as concrete or wood, and as a fire-protection coating for individual cables, cable bundles, cable runs, and cable ducts or other lines.

A further object of the invention is the use of an alkoxylated polymer as coalescing agent in an aqueous fire-protection coating composition comprising i) at least one film-forming resin and ii) at least one intumescent composition to reduce the minimum film-forming temperature of the aqueous fire-protection coating composition. For the use according to the invention, with respect to the alkoxylated polymer, the film-forming resin and the intumescent composition the above-described embodiments apply to the same extent.

The following examples serve for a further explanation of the invention.

### EXEMPLARY EMBODIMENTS

All ingredients of the compositions listed here are - unless otherwise stated - commercially available and have been used in the commercial quality. All % figures given in the examples refer to the total weight of the composition described as the basis for calculation, unless otherwise stated.

### Compounds used in the examples:

**Table 1: List of components used in the examples and references (explanation of abbreviations) and their trade names and sources:**

| **Compound** | **Trade Name** | **Supplier** |
|---|---|---|
| Defoamer | BYK1640 | BYK |
| Waterborne copolymer emulsion | Vinnapas EZ3112 | Wacker |
| Sodium salt of a polymeric carboxylic acid | Nuosperse FX605 | Elementis |
| Intumescent composition | Exolit AP435; Charmor PM40; Melafine; Polwhite E; Kronos 2056; Rockforce MS603 | Clariant; Perstorp; OCI; Imerys; Kronos; Lapinus |
| Rheological agent | Natrosol 250HHR | Ashland |
| Biocide | Acticide MBS | Thor |
| 3-Hydroxy-2,2,4-trimethylpentyl isobutyrate (coalescing solvent) | Texanol | Eastman |
| Isodecyl diphenyl phosphate (plasticiser) | Santiciser 148 | Valtris |
| Polyether based alkoxylated polymer | Solsperse 27000 | Lubrizol |
| Epoxyether based alkoxylated polymer | Solsperse 20000 | Lubrizol |

All coating compositions were prepared by mixing the individual components listed in Tables 2 to 4.

### Comparative Example 1

A physically drying aqueous fire-protection coating composition is used as reference example (comparative example 1).

**Table 2: Composition of comparative example 1 (following prior art document EP3538616B1). All data in weight percentage [wt.-%] with reference to the total weight of the composition.**

| **Material** | **wt.-%** |
|---|---|
| Water | 4.60 |
| Defoamer | 0.50 |
| Waterborne copolymer emulsion | 38.40 |
| Wetting agent: Sodium salt of a polymeric carboxylic acid | 0.70 |
| Intumescent composition | 55.50 |
| Rheological agent | 0.10 |
| Biocide | 0.20 |

### Comparative examples 2 to 4

Comparative examples 2 to 4 were formulated based on the state-of-the-art technique to decrease the glass transition temperature of aqueous coatings by addition of coalescent solvents such as texanol (3-Hydroxy-2,2,4-trimethylpentyl isobutyrate), the addition of plasticisers/flame retardants such as isodecyl diphenyl phosphate or the combination of both. Comparative examples 2 to 4 show the decrease in glass transition temperature by using a coalescing solvent, a plasticiser or the combination of both in a1:1 ratio (by weight).

**Table 3: Composition of comparative examples 2 to 4 containing a coalescent solvent, plasticiser/flame retardant and a combination of both. All values are given in weight percentage [wt.-%] with reference to the total weight of the composition.**

| **Material** | **Comparative example 2** | **Comparative example 3** | **Comparative example 4** |
|---|---|---|---|
| Water | 4.10 | 4.10 | 3.60 |
| Defoamer | 0.50 | 0.50 | 0.50 |
| Waterborne copolymer emulsion | 38.40 | 38.40 | 38.40 |
| sodium salt of a polymeric carboxylic acid | 0.70 | 0.70 | 0.70 |
| Intumescent composition | 55.50 | 55.50 | 55.50 |
| Rheological agent | 0.10 | 0.10 | 0.10 |
| Biocide | 0.20 | 0.20 | 0.20 |
| Texanol (coalescing solvent) | 0.50 | 000 | 0.50 |
| Isodecyl diphenyl phosphate (plasticiser) | 0.00 | 0.50 | 0.50 |

### Examples 1 to 5 according to the invention

Table 3 shows the composition of examples 1 to 5 according to the invention, in which the traditional sodium salt of carboxylic acid is replaced by an alkoxylated polymer based on polyether or EO/PO block copolymer or the combination of both. The same glass transition temperature decrease is achieved as by the use of a plasticiser/flame retardant or a coalescent solvent.

**Table 4: Composition of examples 1 to 5 according to the invention. All values are given in weight percentage [wt.-%] with reference to the total weight of the composition.**

| Material | **Example 1** | **Example 2** | **Example 3** | **Example 4** | **Example 5** |
|---|---|---|---|---|---|
| Water | 4.60 | 4.60 | 4.60 | 4.60 | 4.60 |
| Defoamer | 0.50 | 0.50 | 0.50 | 0.50 | 0.50 |
| Waterborne copolymer emulsion | 38.40 | 38.40 | 38.40 | 38.40 | 38.40 |
| Polyether based alkoxylated polymer | 0.70 | - | 0.35 | 0.52 | 0.18 |
| Epoxyether based alkoxylated polymer | - | 0.70 | 0.35 | 0.18 | 0.52 |
| Intumescent composition | 55.50 | 55.50 | 55.50 | 55.50 | 55.50 |
| Rheological agent | 0.10 | 0.10 | 0.10 | 0.10 | 0.10 |
| Biocide | 0.20 | 0.20 | 0.20 | 0.20 | 0.20 |

Table 5 shows the results of determination of the glass transition temperature by DSC and the pull-off strength of coatings applied to a substrate based on comparative examples 1 to 4 and inventive examples 1 to 5 after low temperature drying conditions at 5 °C.

**Table 5: Glass transition temperature T_{g} [°C] and pull off strength after low temperature drying at 5 °C [MPa] of comparative examples 1 to 4 and inventive examples 1 to 5.**

| | Glass transition T_{g} (°C) | Pull off strength (MPa) |
|---|---|---|
| Comparative Example 1 | 3.1 | 3.1 |
| Comparative Example 2 | -3.8 | 2.8 |
| Comparative Example 3 | -2.8 | 3.0 |
| Comparative Example 4 | -6.8 | 2.6 |
| Example 1 | -4.4 | 3.3 |
| Example 2 | -3.2 | 3.3 |
| Example 3 | -4.1 | 3.5 |
| Example 4 | -3.6 | 3.6 |
| Example 5 | -3.8 | 3.2 |

Table 5 shows that in contrast to the use of plasticiser/flame retardant and/or coalescent solvents or the combination of both coalescing agents selected from the group consisting of alkoxylated polymers improve the film formation and strength of aqueous intumescent coatings at low temperature applications.

### Testing procedures and methods

### Glass transition temperature T_{g}

Determination of glass transition temperature T_{g} of the coating composition was performed by differential scanning calorimetry (DSC) using a DSC3+ machine from Mettler Toledo in an aluminium crucible of 40 µL. All samples were applied to a dynamic heating in the temperature range between -50 °C and 190 °C, 1 heating cycle, heating rate 10 K/min and atmosphere of N₂ at flow rate 70 mL/min.

### Pull off strength after low temperature drying (5° C)

For determination of pull off strength after low temperature drying carbon steel panels of 5 mm thickness which has been grit blasted to Sa21/2 (ISO8501), primed with compatible epoxy primer at 50microns dry film thickness (DFT) were coated with each formulation according to comparative and inventive examples at 1mm wet film thickness (WFT) by drawdown blade (such as Leneta drawdown blades). The coating formulations were let dry in a climatic chamber set at 5°C for 7 days. After 7 days the panels were let dry one day at 23°C to climatise and then 3 aluminium dollies of 2mm diameter (according to ISO4624) were glued to the surface of the intumescent coating. After 24h the glue was cured and the dollies were be pulled off. The results shown in Table 4 contain the average results of 3 dollies pulled off.

## Claims

1. Aqueous fire-protection coating composition comprising:
i) at least one film-forming resin,
ii) at least one coalescing agent,
ii) at least one intumescent composition,
**characterized in that** the coalescing agent is an alkoxylated polymer comprising a polymeric backbone and at least on alkoxy functionality.

2. Aqueous fire-protection coating composition according to claim 1, **characterized in that** the aqueous fire-protection coating composition is free of coalescing solvents and/or plasticizers.

3. Aqueous fire-protection coating composition according to claim 1 or 2, **characterized in that** the aqueous fire-protection coating is free of carboxylic acids.

4. Aqueous fire-protection coating composition according to anyone of the preceding claims, **characterized in that** the film forming resin is based on an aqueous dispersion of polymeric particles.

5. Aqueous fire-protection coating composition according to claim 4, **characterized in that** the polymeric particles comprise a vinyl acetate-based resin selected from the group consisting of polyvinyl acetate, copolymers of vinyl acetate-ethylene, copolymers of vinyl acetate-vinyl esters of carboxylic acids or combinations thereof.

6. Aqueous fire-protection coating composition according to claim 4 or 5, **characterized in that** the aqueous dispersion of the polymeric particles comprises 40 to 60 percentage by weight of water based on the total weight of the aqueous dispersion.

7. Aqueous fire-protection coating composition according to anyone of the preceding claims, **characterized in that** the polymeric backbone of the alkoxylated polymer is selected from the group consisting of polyethers, epoxy ethers; EO/PO block copolymers and combinations thereof.

8. Aqueous fire-protection coating composition according to anyone of the preceding claims, **characterized in that** the at least one alkoxy functionality of the alkoxylated polymer is a linear or branched C₁ to C₆ alkyl moiety bonded to the polymeric backbone via an oxygen atom.

9. Aqueous fire-protection coating composition according to anyone of the preceding claims, **characterized in that** the coalescing agent is present in an amount of 0.01 to 5 % by weight based on the total weight of the aqueous fire-protection coating composition.

10. Aqueous fire-protection coating composition according to anyone of the preceding claims, **characterized in that** the composition further comprises additional water apart from the water of the aqueous dispersion in amount of 1 to 10 % by weight based on the total weight of the aqueous fire-protection coating composition.

11. Fire protection coating produced from the aqueous fire protection coating composition according to one of Claims 1 to 10.

12. Fire protection coating according to Claim 11, **characterized in that** the aqueous fire protection coating composition is applied to a substrate, preferably to a metallic substrate, by means of an airless spraying process.

13. Substrate comprising a fire protection coating according to one of claims 11 or 12.

14. Substrate according to claim 13 **characterized in that** the substrate is a steel structural part or a wooden structural part of a building.

15. Use of an alkoxylated polymer as coalescing agent in an aqueous fire-protection coating composition comprising
i) at least one film-forming resin, and
ii) at least one intumescent composition,
to reduce the minimum film-forming temperature of the aqueous fire-protection coating composition.
